# EUROPEAN PATENT APPLICATION

(11) **EP 0 569 902 A2**
(43) Date of publication of application: **18.11.1993**
(21) Application number: 93107539.4
(22) Date of filing: 10.05.1993
(51) Int. Cl.: G06F 9/44

(54) **User interface system for computers**

(30) Priority: 11.05.1992 US 881409
(71) Applicant: SOFTIS HF, IS-107 Reykjavik (IS)
(72) Inventor: Agnarsson, Snorri, Reykjavik IS-401 (IS)
(74) Representative: Grünecker, Kinkeldey, Stockmair & Schwanhäusser Anwaltssozietät

(57) **Abstract**

In accordance with the present application, user interface functions in a computer application program are handled entirely separately from processing functions performed by an application program and the user interface is called from the application processing part of a program. Whenever the processing part of a program requires a user command, an open user interface system (OUIS) is called and begins interacting with the user. Eventually, the user selects some operation that requires the attention of the processing part of the program. The OUIS then stops interacting with the user and returns control to the processing part. When the requested processing is completed, the processing part calls the OUIS again (requests the next operation) and the OUIS resumes interaction with the user. The elements defining the interface are arranged in a tree, and user actions typically require updating the interaction status of elements in the user interface. Updating entire subtrees to update the user interface occurs in two stages: preupdating and postupdating. The user interface tree is not considered updated until all elements have been postupdated. Preupdating flows down the tree, with no element being preupdated until a preupdate has been made of its parent element, if any. Postupdating flows up the tree, with no element being postupdated until all subelements in its entire subtree has been postupdated. User interface descriptions are stored in special files, independent of the corresponding program. The interface can then be modified without affecting the logical functioning of the application program, and without having to modify the program.

## Description

### Field of the Invention

The present invention relates generally to digital computers and, more particularly, concerns a system for controlling at least the display of a computer for providing an interface to communicate with the user of the computer.

### Background of the Invention

Recently, there has been a great deal of interest in developing graphical user interfacers for personal computers. With the great success and widespread use of Microsoft Windows™, users have come to expect and are demanding, applications which operate with that platform or similar platforms utilizing a graphical user interface, such as the Apple Macintosh™. Most current graphical user interface operating platforms support a variety of types of interaction with the user of the computer, for example, text entry fields, buttons, menu bars, menus and menu items. However, they do not have a unified way of controlling the interaction status of the interface items (i.e. their visibility and capability of interacting with the user). In general, each type of interaction has its own method of control that is different from other types of interaction, and even the terminology may be different for different types of interaction.

Moreover, in current systems, application processing functions and interface functions are intermingled, and the application programmer must be concerned with handling interface operations, along with processing operations. In essence, each time an application is written for a new platform, the programmer must write a substantially new program, since there is no uniformity in how interfaces are handled. This makes it very time consuming and expensive to write applications for new platforms and operating systems.

Basically, it is an object of the present invention to provide a computer programming structure and method which avoids the shortcomings of existing structures and methods. It is specifically contemplated that control of the user interface of the computer be provided in such a manner as to permit applications to be programmed substantially independently of the user interface.

It is another object of the present invention to provide a computer user interface system and method in which the user interface can be created and modified independently of the processing part of an application and in which the intercommunication between the processing part of an application and the user interface is substantially universal, so that processing parts of applications can be written in an essentially portable manner.

In accordance with the present invention, user interface functions in a computer application program are handled entirely separately from processing functions performed by an application program and the user interface is called from the application processing part of a program. Whenever the processing part of a program encounters a user interface command, an open user interface system (OUIS) is accessed and begins interacting with the user. Eventually, the user selects some operation that requires the attention of the processing part of the program. The OUIS then returns a message to the processing part, which causes it to perform the necessary processing functions. When the requested processing is completed, the processing part accesses the OUIS again, indicating that it is ready for the next operation.

User interface descriptions are stored in special files, independent of the corresponding program. The interface can then be modified without affecting the logical functioning of the application program, and without having to modify the program.

From the point of view of a user of a program, a program written in the OUIS behaves just like any other program written on that platform (e.g. Macintosh™ or Microsoft Windows™). From the point of view of an applications programmer, however, the OUIS is quite different from other user interface management systems, in that it provides a uniform and simple method for interacting with a user, and is platform independent and independent of the processing part of the application code. From the point of view of the interface designer, the OUIS provides the advantage that it offers a way to design user interfaces on a high level, separate from both the processing part of the program and the details of event handling.

In the OUIS objects or interface elements are arranged in a tree-like structure. These objects may represent the sort of elements one would find in any graphical user interface, such as menus, menu items, windows, text fields and buttons. Each such element may assume any one of a limited number of readiness states. For example, those states may be defined as hidden, disabled and active. In addition, each interface element has an interaction "status", which is dependent upon its state and the status of parent elements located up the tree, towards its root. The status is therefore considered to be derived. For example, there may be five statuses, defined as unlinked, invisible, visible, perceptive and effective. The derived status of all the elements of the interface at any instant of time describes the instant status of that interface.

Updating entire subtrees to update the user interface occurs in two stages: preupdating and postupdating. The user interface tree is not updated until all elements have been postupdated. Preupdating flows down the tree, with no element being preupdated until a preupdate has been made of its parent element, if any. Postupdating flows up the tree, with no element being postupdated until all subelements in its entire subtree has been postupdated.

A "context" is a special object used for (relevant and irrelevant) control between interface elements. A context has two states: Any interface element may make some set of contexts relevant when it becomes effective and decrease their relevance when it stops being effective. Certain interface elements may be registered as being dependent up on the context. These dependent elements are notified when the context becomes relevant or irrelevant and the dependent elements can then activate, disable or hide themselves as the context changes.

### Brief Description of the Drawings

The foregoing brief description as well as further object, features, and advantages of the present invention will be understood more completely from the following detailed description of a presently preferred, but nonetheless illustrative, embodiment of the present invention, with reference being had to the accompanying drawings, wherein:
Figure 1 is a functional block diagram illustrating how a user interface system in accordance with the present invention would be utilized;
Figure 2 is a representation of a computer display screen useful in describing basic concepts related to how a user interface system in accordance with the present invention operates;
Figure 3 is a schematic diagram illustrating an object tree representing the computer screen of Fig. 2;
Figure 4 is a representation of a computer display screen similar to Fig. 2, illustrating the appearance of the screen after some modifications have been made; and
Figure 5 is a flow chart illustrating how object statuses are updated in a subtree, in accordance with a preferred embodiment of the present invention.

### Detailed Description of the Preferred Embodiment

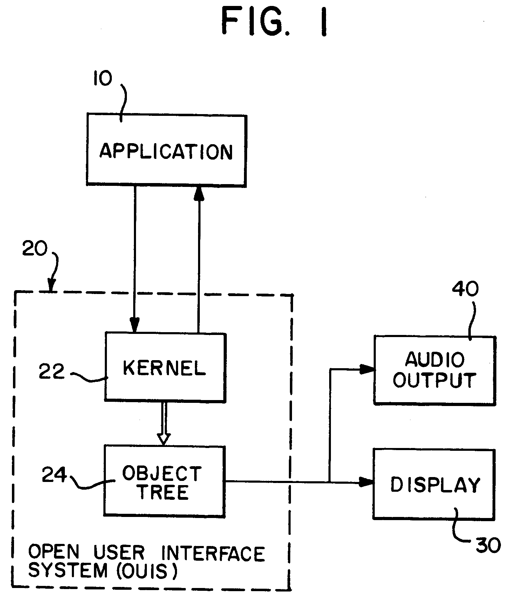

Turning now to the details of the drawings, Fig. 1 is functional block diagram illustrating how an Open User Interface system (OUIS) in accordance with the present invention is utilised in a computer running under an operating system (e.g. MSDOS) and on a specific platform (e.g. Microsoft Windows™). In accordance with the present invention, the application program 10 includes no user interface operations, these being reserved to OUIS 20. Through the operating system of the computer on which application program 10 is run, OUIS 20 controls the system display 30 and the system audio output 40. In operation, whenever application program 10 needs to interface with the user, it will transfer control to OUIS 20, which will communicate with the user through display 30 and audio output 40. The OUIS continues to communicate with the user until such time as he performs an action which requires processing. At that point, OUIS 20 returns control to application program 10.

OUIS 20 broadly comprises a kernel 22 and an interface description in the form of a tree of interface elements, also called an object tree, which will be discussed further below. The application program interface (API) between application program 10 and kernel 22 is a "uniform" interface in the sense that the same interface would be present between the application and the kernel regardless of the platform and the operating system employed in the computer. This permits the application to be entirely portable, in that it could be designed and programmed in a conventional programming language, such as C, and compiling with an appropriate compiler for the operating system would ready the application for use on any platform with a minimum amount of modification. The API includes an extremely small number of instructions, all of which are calls from the application to the OUIS. In the preferred embodiment, only the following six instructions are provided in the API:
OPEN
CLOSE
WAIT FOR ACTION
FIND ELEMENT
GET VALUE
SET VALUE
FIND ELEMENT locates a particular display object to be handled, such as a window, a menu, or button. OPEN and CLOSE are functions that start and end a session of communicating with the user of the computer through an OUIS, respectively. WAIT FOR ACTION produces a pause until some response is provided by the user (e.g. until the user requests a recalculation on a spreadsheet). GET VALUE and SET VALUE recover values from and store values in elements, respectively.

Object trees 24 contain a full definition of the complete user interface. These descriptions are defined in terms of the interface objects available in the operating system and the platform. For example, if the operating system and platform provide for windows, a window would be made available as an object. Kernel 22 interprets the instructions received from application program 10 and performs appropriate operations on the object trees to achieve visual and audible communication with the user. When a user takes an action which requires processing, such as performing a computation, kernel 22 returns control to application program 10, usually indicating a location where the result of the process is to be stored. This location would typically correspond to the interface element which is to receive the result.

From the foregoing description, it will be appreciated that the present invention makes it possible to design user interfaces entirely independently of the application processing. Since kernel 22 and object trees 24 are designed to work with specific operating systems and platforms, the application in combination with the OUIS will have the look and feel of the corresponding operating system and platform. Furthermore, it is possible to modify the user interface entirely independently of the application, so that an interface can be designed separately and apart from the processing part of the application program and without any consideration of the details of event handling.

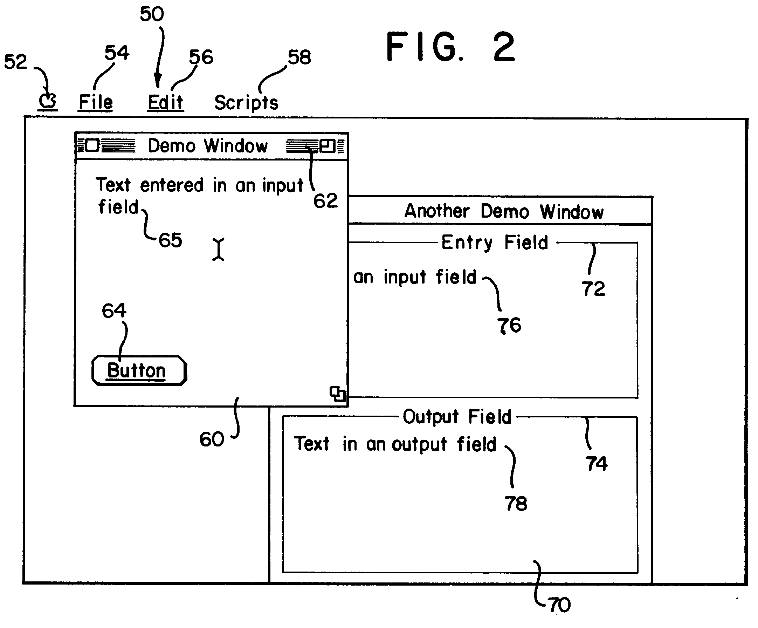

Figure 2 is a representation of the screen of a computer which is running in an OUIS in accordance with the present invention. This is a screen from an Apple Macintosh™ computer and demonstrates that the OUIS retains the characteristic look and feel of the underlining operating system and platform. The screen includes the characteristic Macintosh™ menu bar 50 at the top, which, in this case, includes four selections 52, 54, 56 and 58, each of which will result in the display of a pull-down menu when selected. Of the four menu choices, only 58 ("scripts") is not highlighted, indicating that it is not available as a choice. The screen of Fig. 2 also includes a pair of windows 60, 70, with window 60 being active (in the foreground) and window 70 inactive (in the background). As is typical in a Macintosh™, window 60 is indicated as active by having its title highlighted with an emphasis band 62. As can be seen, window 60 has a text input field 65 and a button 64. Moreover, button 64 is active, because its text is shown highlighted. Inactive window 70 includes a text entry field 76 and a text output field 78 surrounded by the frames 72 and 74, respectively.

Elements 50, 52, 54, 56, 58, 60, 64, 65, 70, 72, 74, 76 and 78 are considered "objects" in the OUIS of the preferred embodiment. In accordance with the present invention, all the interface objects to be controlled are arranged as the nodes of a tree, in which they are interconnected in the same manner as the display. In the preferred embodiment, the hierarchical relationship of the nodes representing the interface objects is the same as the containment relationship of the objects on the screen.

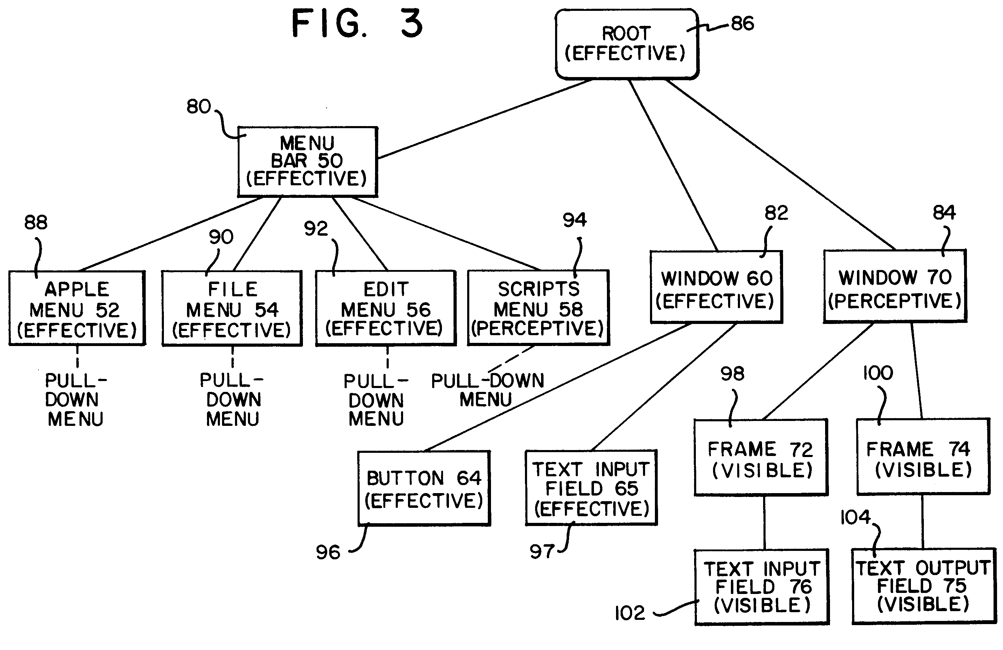

Figure 3 illustrates an interface tree corresponding to the screen of Fig. 2. For convenience of description, the node 80 corresponding to menu bar 50 and the nodes 82 and 84 corresponding to windows 70 and 72, respectively have been shown as being directly below the root node 86. Nodes 88, 90, 92 and 94, corresponding to display of elements 52, 54, 56 and 58, respectively, occur immediately below and branch out from node 80. Node 96 and 97 corresponding to button 64 and text field 65 occur immediately below node 82, and nodes 98 and 100, corresponding to frames 72 and 74, respectively occur immediately below node 84. Nodes 102 and 104 corresponding to fields 76 and 78 are below their respective frame nodes.

From the description of Fig. 2, it should be clear that the interface objects of the OUIS must be capable of assuming different interaction statuses. For example, window 60 and its button 64 are fully capable of interaction with the user, whereas window 70 is not. In accordance with the preferred embodiment, an object can assume any of five interactive statuses: effective, perceptive, visible, invisible, and unlinked (in order of decreasing interactivity).

An object which has "effective" status is at the highest level of interactivity. It can receive any user event or message, is visible to the user in the display (at least potentially without changing status), and is capable of passing user events or messages to its subelements.

An object which is in a "perceptive" status may not pass user messages or events to its subelements, but is otherwise as interactive as an effective element, as far as communication with the user is concerned. A "visible" element may be seen on the computer display, but cannot communicate with the user. An "invisible" user interface element cannot be seen on the computer display and cannot communicate. An "unlinked" interface element is not part of the current interface tree. It must be linked before it can assume a higher (previously mentioned) interaction status. Needless to say, this element is not visible and cannot receive user events.

In accordance with the present invention, each of the interface elements also has a readiness state, which is an indication of its ability to assume one of the interactive statuses. As will be explained more fully below, whether an element can achieve an interaction status comparable to its readiness state is determined by the status of its parent element. In the preferred embodiment, three readiness states are defined: active, disabled, and hidden.

An interface element in the active state is ready for full effective status, including full communication with the user and its subelements, assuming its parent element has a sufficiently high status. An interface element in the disabled state has the potential to assume a status as high as perceptive, assuming its parent element has a status at least as high as effective. An interface element in the hidden state can assume a status no higher than invisible, but will be unlinked if the subtree containing it is not linked to the active tree (e.g. its parent element is unlinked).

Table I illustrates how element status is determined by an element's state and the status of its parent element. It should be noted that an element's status is limited by the status of its parent. An element with an invisible or unlinked parent will therefore be invisible or unlinked, respectively. Similarly, an element with a visible parent can assume a status no higher than visible, regardless of its state, and an element with a hidden state must have a status of invisible if its parent is linked. When a parent element is perceptive, it cannot communicate with its subelements, so that the subelements can assume a status no higher than visible. Finally, if the parent of an element is effective, that element will assume the status corresponding to its state.

**TABLE I**

| **DETERMINATION OF ELEMENT STATUS** | | | | | |
|---|---|---|---|---|---|
| ELEMENT STATE | PARENT STATUS | | | | |
| | Effective | Perceptive | Visible | Invisible | Unlinked |
| ACTIVE | Effective | Visible | Visible | Invisible | Unlinked |
| DISABLED | Perceptive | Visible | Visible | Invisible | Unlinked |
| HIDDEN | Invisible | Invisible | Invisible | Invisible | Unlinked |

Having defined element state and described the derivation of status from an element's state and its parent's status, it would now be instructive to review the tree diagram of Fig. 3 from the point of view of interactive status. Since nodes 80 and 82 are capable of communication with the user and with their subelements, they all have effective status. Of the subelements in menu bar 50, the user can communicate with element 58, but node 94 is merely perceptive. The remaining subelements of menu bar 50 are all effective, since they can respond to the user, and so can their respective pull-down menus, although they are not visible in the figure. A user is fully capable of utilizing window 60, its button 64, and its text input field 65. Moreover, all of these elements have the capability to communicate downwardly, so that all of these elements are effective.

Those skilled in the art and familiar with the Macintosh™ computer will appreciate that, although window 70 is inactive, it could be activated at anytime through the user clicking a mouse on it. However, since the window is in a disabled state, the status of node 84 is perceptive and its subelements are visible.

Figure 3 illustrates the screen that would be obtained if the user clicked on window 70 to activate the same. Window 73 then assumes the effective status and window 60 becomes perceptive. With window 60 perceptive, button 64 can, at best, be visible, so that the highlight of the word "button" disappears to indicate that it is not available as a selection. The highlight band 73 at the top of menu 70 indicates that the menu is now effective. In addition, element 72, 74, 76 and 78 are also effective and user input is available to field 76. The change of status of all of the elements of the tree is effected through a procedure which will be discussed in detail below.

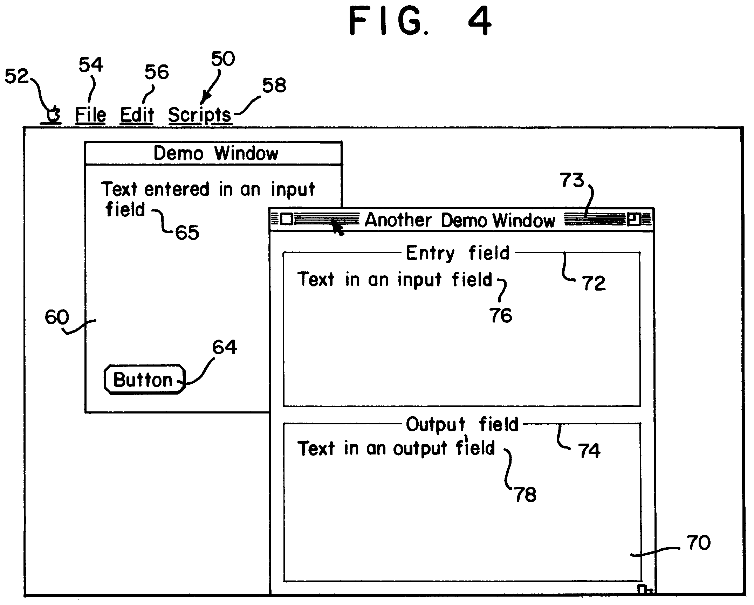

It should be noted that the menu bar 50 in Fig. 4 is different from the menu bar in Fig. 2, in that element 58 is effective in Fig. 4 and not in Fig. 2. Moreover, it should be noted that the change in menu bar 50 occurred without the user acting upon the menu bar, but simply through his activation of window 70. In other words, when window 70 was activated, the user gained the ability to execute scripts, whereas in window 60, this feature was not available. In accordance with the present invention, the OUIS is able to control the status of interface elements based upon complicated conditions, by making use of additional objects called "contexts." A context is an internally maintained object which can assume two states referred to as "relevant" and "irrelevant", depending upon the status of the interface tree. When a new element is created, it may be registered with one or more contexts as dependent upon them. When a context changes relevance, it will notify every registered element of the context change, and the element may then modify its status accordingly. In the illustrative user interface, there is a context object related to scripts. This context is relevant when a window of the same type as window 70 is effective and irrelevant otherwise. Thus, the scripts context changed relevance when window 70 became effective, element 58 was notified of the context change and changed to the active state and effective status in response. Should window 60 be reactivated and window 70 disabled, the context would again become irrelevant and element 50 would assume the disabled state. The use or context makes its especially efficient to modify elements based upon complicated conditions.

Whenever an element changes state, when it is newly linked to a parent element, when it is newly unlinked, when it becomes the root of an interface tree in use, or when it stops being the root of an interface tree in use, the entire subtree of which that element constitute the root must be updated in status. In accordance with the preferred embodiment, such update is performed by means of a processing module called "Change Status."

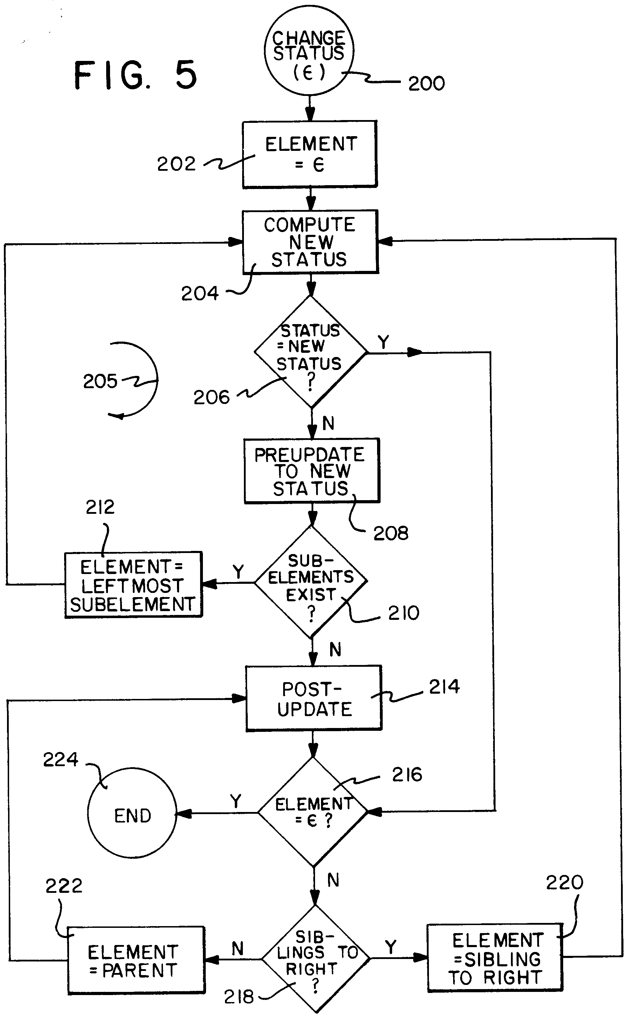

Figure 5 is a flow chart illustrating the operation of the program module Change Status. When Change Status is first invoked, the value of a variable ε must be provided. This represents the identity of the local root of the subtree to be updated. Beginning with this element, each element in the subtree is updated in two stages, referred to as a "preupdate" and a "postupdate." The actual update is not complete until all elements have been postupdated.

Beginning with the element ε, elements which need to be updated are preupdated by working from the top down along the leftmost branch of the tree. When an element is found which has no subelements, that element is also postupdated if no element at the same level of the tree exists to the right of this postupdated element (referred to herein as a "sibling" to the right). If there is a sibling to the right, update processing continues with that sibling's subtree and additional sibling subtree successively further to the right. If there are no siblings to the right, processing moves up the tree to the parent, which is postupdated, and processing continues with the rightmost sibling of the parent. Eventually, the element ε is postupdated and the Change Status routine terminates.

In Fig. 5, the change status routine is invoked at block 200, together with an identification of the starting element, ε. At block 202, the value of variable "ELEMENT" is set equal to ε, and at block 204: the status of the present element is the computed, based upon its state and the status of its parent, if any, in accordance with Table I.

Block 204 is the first block of a loop 205, comprising blocks 204, 206, 208, 210 and 212, in which all of the elements in the leftmost branch of a subtree are preupdated. At block 206, a test is performed to determine whether or not the current status of the current block is equal to the newly computed status (i.e. the status of the block is to be unchanged) and, if so, control is transferred to block 216, exiting loop 205. Assuming that the status of the current element is to be change, it is preupdated to its new status at block 208. A test is then performed at block 210 to determine whether subelements of the current element exist. If so, the leftmost subelement is made the current element, and control is transferred to block 204 for further iteration through loop 205. In this fashion, a new status will be computed and a preupdate effected for each subelement in the leftmost branch of the tree, until the test at block 10 determines that the current element has no subelements. At that point, the current element is postdated at block 214.

At block 216, a test is performed to determine whether the element which has just been postdated is the local root element, ε. If so, the entire subtree would have been postdated, and the procedure module Change Status terminates at block 224. If the current element is not element ε, then processing must continue, and a test is performed at block 218 to determine whether or not the current element has a sibling to the right. If not, the program begins processing the parent of the current element at block 222 and control returns to block 214, where that element is postupdated. Blocks 214, 216, 218 and 222 in fact define a further loop 215 in which processing advances is back up the tree, postdating elements.

If the test at block 218 indicates that siblings exist to the right of the current element, then the sibling to the right becomes the current element, and processing returns to block 204. Repeated passes through loop 205 will then preupdate the leftmost branch of the subtree in which the rightmost sibling element is the local root.

From the foregoing description, it will be appreciated that, ultimately, every element will be preupdated in the fashion described, every element will eventually be postupdated, and through the upward movement through the tree achieved via loop 215, element ε will eventually be postupdated and the program module Change Status will terminate at block 224.

It will be appreciated that, although the illustrative embodiment of the procedure Change Status preupdates the leftmost branch and advances to siblings to the right, this is not essential to the invention. The procedure could, in fact, advance down branches at random and proceed to siblings at random, so long as it keeps track of which branches and siblings are processed, in order to avoid the duplication.

Although a preferred embodiment of the invention has been disclosed for illustrative purposes, those skilled in the art will appreciate that many additions, modifications, and substitutions are possible without departing from the scope and spirit of the invention as defined by the accompanying claims.

## Claims

1. In a programmable digital computer having means for interfacing with a user of said computer, including means for receiving commands from the user and means for communicating information to the user, including a display:
application processing means including all processing modules required to perform the data processing functions of an application program;
an open user interface system (OUIS) coupled with said application processing means, responsively coupled with said means for receiving, and coupled to control said means for communicating, said OUIS being called by and transferring control to said application processing means when user action requires data processing, and said application processing means returning control to said OUIS after performing the requested data processing functions.

2. The combination of Claim 1 wherein said OUIS further comprises:
object containing tree means for controlling at least said display, said object containing tree means having a plurality of objects each dedicated to controlling a specific feature of said display, some features being contained within others, said objects being interconnected in the form of an object tree hierarchically arranged so that features contained within others are below said others in said tree; and
kernel means bilaterally communicating with said application processing means for controlling the structure of said object containing tree means, said kernel means communicating with said application processing means by using a limited set of instruction codes including at least codes for initiating use of and terminating use of closing specific object trees, codes for placing values in and extracting values from specific objects, and code for effecting a standby status of said application processing means.

3. The combination in accordance with Claim 2 wherein said object containing tree means contains objects which may assume any one of a plurality of predefined interaction statuses affecting the appearance and interactivity of the object in the display, each object having a predefined readiness state, the interaction status of each object being determined by its state and the status of its parent in the interface tree, if any.

4. The combination of Claim 3 wherein the available readiness states for the objects are active, disabled, and hidden and the available interaction statuses for objects are effective, perceptive, visible, invisible, and unlinked, the interaction status of an element being determined in accordance with the following table:
| **ELEMENT STATUS** | | | | | |
|---|---|---|---|---|---|
| ELEMENT STATE | PARENT STATUS | | | | |
| | Effective | Perceptive | Visible | Invisible | Unlinked |
| ACTIVE | Effective | Visible | Visible | Invisible | Unlinked |
| DISABLED | Perceptive | Visible | Visible | Invisible | Unlinked |
| HIDDEN | Invisible | Invisible | Invisible | Invisible | Unlinked |

5. In a digital computer having input means for receiving communications from the user of the computer and output means for communicating information to the user, said output means including at least a display and having a plurality of output elements, some of which are contained in other output elements, said method comprising the steps of:
representing said output elements by an interface tree having a node corresponding to each output element, with output elements being arranged on subtrees so that elements which contain other elements are above said other elements in the tree;
assigning to each element a readiness state defining the element's, potential ability to interact with the user and to transmit user events to subelements;
determining an interaction status for each element depending upon the status of its parent in said tree and the state of the element; and
controlling the appearance of each element in said display in accordance with its interaction status.

6. The method of Claim 5 wherein the available readiness states for the elements are active, disabled, and hidden and the available interaction statuses for elements are effective, perceptive, visible, invisible, and unlinked, the interaction status of an element being determined in accordance with the following table:
| **ELEMENT STATUS** | | | | | |
|---|---|---|---|---|---|
| ELEMENT STATE | PARENT STATUS | | | | |
| | Effective | Peceptive | Visible | Invisible | Unlinked |
| ACTIVE | Effective | Visible | Visible | Invisible | Unlinked |
| DISABLED | Perceptive | Visible | Visible | Invisible | Unlinked |
| HIDDEN | Invisible | Invisible | Invisible | Invisible | Unlinked |

7. The method of Claim 5 further comprising, for updating the status of a subtree, the steps of:
beginning with the local root element of said subtree, preupdating each element, with no element being updated until its parent element has been preupdated;
postupdating an element only after every subelement in its subtree has been postupdated.

8. The method of Claim 7 further comprising the steps of:
postupdating an element when it has no subelements;
when a postupdated element has unprocessed siblings at the same level, preupdating the subtrees of unprocessed siblings; and
when a postupdated element has no unprocessed siblings, moving up the tree to its parent and postupdating its parent.

9. The method of Claim 6 further comprising, for updating the status of a subtree, the steps of:
beginning with the local root element of said subtree, preupdating each element, with no element being updated until its parent element has been preupdated; and
postupdating an element only after every subelement in its subtree has been postupdated.

10. The method of Claim 9 further comprising the steps of:
postupdating an element when it has no subelements;
when a postupdated element has unprocessed siblings at the same level, preupdating the subtrees of unprocessed siblings; and
when a postupdated element has no unprocessed siblings, moving up the tree to its parent and postupdating its parent.
